# EUROPÄISCHE PATENTSCHRIFT

(11) **EP 2 589 486 B1**
(45) Veröffentlichungstag und Bekanntmachung des Hinweises auf die Patenterteilung: **20.08.2014**
(21) Anmeldenummer: 12190715.8
(22) Anmeldetag: 31.10.2012
(51) Int. Cl.: B29D 30/00, B65D 19/44, B65D 85/06, B65D 25/10, A47F 7/04, B65D 85/68

(54) **Lager- und Transportvorrichtung zur Aufnahme von Reifen**
Storage and transport apparatus for receiving tire
Appareil de stockage et transport pour recevoir des pneus

(30) Priorität: 02.11.2011 DE 202011051848 U
(43) Veröffentlichungstag der Anmeldung: 08.05.2013
(73) Patentinhaber: Rotom Deutschland GmbH, 50189 Elsdorf (DE)
(72) Erfinder: Steingräber, Uwe, 52428 Jülich (DE)
(74) Vertreter: Vorberg, Jens

(56) Entgegenhaltungen:
- CN-Y- 201 287 747
- JP-A- 8 191 744
- JP-A- 8 301 280

## Beschreibung

Die Erfindung betrifft eine Lager- und Transportvorrichtung zur Aufnahme von Reifen, umfassend ein Bodenteil, zwei Seitenteile und ein Rückenteil, wodurch ein nach vorne offener Behälter gebildet wird gemäß dem Oberbegriff des Patentanspruchs 1. Eine Vorrichtung dieser Art ist z.B. aus der US-A-3 812 974 oder aus der US-A-2011 / 0210023 bekannt. In einen solchen Behälter können Reifen hochkant eingebracht und gelagert werden. Zusammen mit den Reifen kann der gesamte Behälter bei Bedarf auch angehoben und transportiert werden.

Ein derartig gebildeter Behälter kann ferner in mehrere Abteile aufgeteilt sein, wobei in jedes Abteil jeweils ein Reifen hochkant von vorne einbringbar ist. Jedes der Abteile weist dann auf der nach vorne offenen Seite eine nach außen schwenkbare Klappe auf, so dass durch Hochschwenken der Klappen ein Herausrollen der Reifen aus den Abteilen verhindert werden kann.

Derartige Vorrichtungen weisen gegenüber herkömmlichen Regalgestellen mit einer oder mehreren Etagen zur Aufnahme von Reifen den Vorteil auf, dass die Reifen durch die Aufteilung in Abteile nicht zur Seite wegkippen können. Ferner sind die Reifen durch vordere Klappen gegen Herausrollen gesichert, wobei die Klappen im ausgeklappten Zustand auch als Rampe genutzt werden können. Insbesondere bei größeren Reifen wie Flugzeugreifen ist dies vorteilhaft, da es die Einbringung der Reifen in die Lager- und Transportvorrichtung erleichtert, denn die Reifen können über die durch eine Klappe gebildete Rampe in die Vorrichtung gerollt werden.

Die US 3,812,974 offenbart beispielsweise eine Lager- und Transportvorrichtung, in die Reifen vor der Vulkanisierung besonders geschützt eingebracht werden können, um eine Verformung zu verhindern. Dazu weist die Vorrichtung für jeden Reifen ein eigenes Abteil auf, und jedes Abteil kann auf der vorderen Seite durch eine Klappe geschlossen werden. Die Reifen werden in Schlingen gelegt, die sich innerhalb der Abteile befinden, wobei jede Schlinge in Verbindung mit der Klappe der jeweiligen Abteils steht. Wird eine Klappe nach außen geschwenkt, wird die jeweilige Schlinge zusammen mit dem Reifen leicht angehoben, was die Herausnahme des Reifens erleichtert. Um Reifen unterschiedlicher Größe aufnehmen zu können, ist die Länge der Schlingen in jedem Abteil variabel, so dass durch die Verkürzung einer Schlinge in diesem Abteil ein kleinerer Reifen gelagert werden kann.

Die US 2011/0210023 A1 offenbart eine ähnliche Lager- und Transportvorrichtung zur Aufnahme von Reifen, bei der jedoch innerhalb der Vorrichtung keine Abteile gebildet sind. Daher ist statt mehrerer Klappen auch nur eine durchgehende Klappe erforderlich, welche soweit nach innen schwenkbar ist, dass sie alle eingebrachten Reifen in Position hält. Die Stellung der Klappe wird somit an die Größe der Reifen angepasst, wobei die eingebrachten Reifen jedoch alle die gleiche Größe haben müssen. Werden Reifen mit unterschiedlichen Größen aufgenommen, würde die Stellung der Klappe durch den größten Reifen vorgegeben, wodurch kleinere Reifen zu wenig Halt haben könnten. Beim Transport der Vorrichtung zusammen mit den Reifen kann dies zu nachteiligen Verschiebungen der kleineren Reifen führen.

Ferner offenbart die CN 201 287 747 eine weitere Vorrichtung zur Aufnahme von Reifen, und die JP 8 191744 offenbart ein Regal zur Aufnahme mehrerer Reifen auf unterschiedlichen Ebenen, bei dem die Reifen durch eine Kette gegen ein Herausrollen aus dem Regal gesichert sind. Darüber hinaus zeigt die JP 8 301 280 ein Regal zur Lagerung von Reifen, bei dem die Reifen durch Stangen auf zwei Seiten gegen ein Herausrollen aus dem Regal gesichert wird. Die Stangen können dazu auf unterschiedlichen Höhen zwischen vertikalen Pfosten angebracht werden, um die Sicherung so an verschiedene Reifengrößen anpassen zu können.

Aufgabe der Erfindung ist es, eine möglichst einfach und robust aufgebaute Lager- und Transportvorrichtung bereitzustellen, mit welcher Reifen unterschiedlicher Größe gelagert und auch sicher transportiert werden können.

Erfindungsgemäß wird diese Aufgabe durch eine Vorrichtung gemäß dem unabhängigen Anspruch 1 gelöst. Vorteilhafte Weiterbildungen der Vorrichtung ergeben sich aus den Unteransprüchen 2-14.

Die erfindungsgemäße Lager- und Transportvorrichtung zur Aufnahme von Reifen umfasst ein Bodenteil, zwei Seitenteile und ein Rückenteil, wodurch ein von vorne zugänglicher Behälter gebildet wird, der ferner durch wenigstens ein parallel zu den Seitenteilen verlaufendes Abtrennungsteil in mehrere Abteile aufgeteilt ist. Dabei ist in jedes Abteil jeweils ein Reifen hochkant einbringbar. Jedes der Abteile weist ferner auf der von vorne zugänglichen Seite eine schwenkbare Klappe auf, die am Rand des Bodenteils gelagert ist. Erfindungsgemäß sind die Klappen in einer hochgeschwenkten Stellung durch Verriegelungsmittel in einer definierten Position fixierbar, und die Vorrichtung umfasst wenigstens eine Funktionsstange, wobei die Seitenteile und das wenigstens eine Abtrennungsteil Mittel aufweisen, um diese wenigstens eine Funktionsstange so zwischen diesen anzubringen, dass hierdurch das jeweilige Abteil in zwei Bereiche aufgeteilt wird. Die Verriegelungsmittel können dabei an einem Seitenteil und dem wenigstens einen Abtrennungsteil angebracht sein.

Die Fixierung der Klappen in einer definierten Stellung in Kombination mit der Aufteilung der Abteile in mehrere Bereiche durch Funktionsstangen hat dabei den Vorteil, dass Reifen verschiedener Größen aufgenommen werden können, ohne dass sich diese unerwünscht innerhalb der Vorrichtung bewegen. Die Klappen bleiben dabei in ihrer fixierten Stellung, auch wenn in einigen Abteilen kleinere Reifen aufgenommen werden als in anderen Abteilen. Weiterhin sind die Klappen vorteilhaft als Rampen zum Hinein- und Herausrollen von Reifen nutzbar, wobei die einzelnen Klappen für jedes Abteil den weiteren Vorteil haben, dass sie leicht zu handhaben sind, da im Gegensatz zu anderen Lösungen im Stand der Technik keine durchgehende Klappe bewegt werden muss, die ein wesentlich höheres Gewicht hätte.

Um eine Bewegung der in die Lager- und Transporteinrichtung eingebrachten Reifen zu verhindern, werden die Funktionsstangen so in die Abteile eingebracht, dass sie sich möglichst nah an dem jeweiligen Reifen befinden bzw. an diesem anliegen. Mit der erfindungsgemäßen Vorrichtung ist es somit möglich, auf einfache Weise Reifen verschiedener Größen zu lagern und zu transportieren. Die Vorrichtung kommt dabei auch ohne aufwendige Aufhängungen für Reifen aus.

Vorzugsweise weisen die Seitenteile und das Abtrennungsteil Mittel zur Anbringung der Funktionsstange in wenigstens zwei Stellungen auf, wobei sich die Stellungen durch ihre horizontale Lage auf den Seitenteilen und dem Abtrennungsteil unterscheiden. So kann die Lage einer Funktionsstange an die Größe eines angebrachten Reifens angepasst werden.

In einem Ausführungsbeispiel der Erfindung sind das Abtrennungsteil und/oder die Seitenteile und die Funktionsstange so ausgebildet, dass die Funktionsstange auch vollständig an dem Abtrennungsteil und/oder den Seitenteilen angebracht werden kann, ohne dass hierdurch ein Abteil in zwei Bereiche aufgeteilt wird. Die Funktionsstangen sind somit an der Vorrichtung anbringbar, auch wenn sie zeitweise nicht in Gebrauch sind.

Vorzugsweise umfasst jedes Abteil Sicherungsmittel, mit denen auf der Außenseite jeder Klappe wenigstens zwischen einem Seitenteil und einem Abtrennungsteil eine Funktionsstange so anbringbar ist, dass dadurch eine Bewegung der zugehörigen Klappe nach außen verhindert wird. Ergänzend zu der Aufteilung von Abteilen in Abschnitte werden Funktionsstangen erfindungsgemäß somit auch genutzt, um Klappen zusätzlich zu Verriegelungsmechanismen gegen unerwünschte Bewegungen zu sichern. In einem Ausführungsbeispiel der Erfindung sind die beschriebenen Funktionsstangen dabei identisch, und die Vorrichtung ist entsprechend ausgebildet, um diese Mehrfachfunktionalität der Funktionsstangen zu gewährleisten. Einzelne Funktionsstangen können so an verschiedenen Punkten der Vorrichtung für unterschiedliche Zwecke genutzt werden, was eine Materialeinsparung bewirkt und die Vorrichtung sehr variabel gestaltet.

In einem weiteren Ausführungsbeispiel der Erfindung ist für den Aufbau der Vorrichtung vorgesehen, dass zwei Seitenteile und das Rückenteil zwischen vier vertikal auf den Eckbereichen des Bodenteils angebrachten Eckpfosten montiert sind, wobei diese Eckpfosten die zwei Seitenteile und das Rückenteil überragen und die obere Enden der Eckpfosten durch wenigstens zwei horizontale Seitenstreben und eine horizontale Rückenstrebe miteinander verbunden sind. So wird aus Eckpfosten und Streben eine Art Käfig gebildet, welcher die Reifen schützt, wobei die Reifen aber auch sichtbar und von den Seiten zugänglich sind.

Ein Abtrennungsteil kann ebenfalls durch mehrere Streben gebildet werden, wobei es wenigstens eine horizontale Strebe und eine sich an deren erstem Ende anschließende vertikale Strebe umfasst, und die vertikale Strebe auf Höhe der Klappen an dem Bodenteil angebracht ist, während die horizontale Strebe mit ihrem zweiten Ende an dem Rückenteil montiert ist. Das Abtrennungsteil kann weiterhin eine schräg abgewinkelte Verbindungsstrebe umfassen, die an dem Rückenteil angebracht ist, wobei ein erster Abschnitt der Verbindungsstrebe von dem Rückenteil aus parallel zu den horizontalen Seitenstreben nach vorne verläuft und ein zweiter Abschnitt unter einem Winkel β zu dem oberen Ende der vertikalen Strebe hin verläuft. Der Winkel β ist dabei größer als 90°. Durch diese rechtwinklige Trapezform des so gebildeten Abtrennungsteils wird beispielsweise die Handhabung der Vorrichtung erleichtert und sicherer ausgestaltet, da Personen, die Reifen in die Vorrichtung hinein- bzw. aus dieser herausrollen, eine gewisse Kopffreiheit ermöglicht wird. Ferner werden so spitze Ecken im Kopf- und insbesondere im Augenbereich von Personen vermieden. Müssen sich Personen beim Hinein- und Herausrollen von Reifen beispielsweise leicht bücken und möchten in dieser Haltung auch zwischen den Abteilen der Vorrichtung wechseln, besteht somit eine geringere Gefahr, dass sie mit dem Kopf an den Abtrennungsteilen anstoßen und sich gegebenenfalls sogar Verletzungen im Augenbereich zuziehen. Auch die vorderen Eckpfosten und die seitlichen horizontalen Streben, welche eine Art Außenrahmen bilden, könnten entsprechend ausgebildet werden. In diesem Fall würden die Kopffreiheit und damit die Sicherheit auch in den Seitenbereichen der Vorrichtung erhöht. Hierdurch könnte zwar die Stapelbarkeit der Vorrichtung verschlechtert werden, da die Stabilität im vorderen Bereich nicht mehr ausreichend gegeben sein könnte, aber in Abhängigkeit vom Anwendungsgebiet und den Anforderungen an die Vorrichtung könnten diese Vor- und Nachteile gegeneinander abgewogen werden.

Vorzugsweise wird das Rückenteil durch eine Rückenplatte und wenigstens eine vertikale Rückenstrebe gebildet ist, an welcher die Rückenplatte angebracht ist. Dabei kann die Rückenplatte in einem Winkel α zu dem Bodenteil stehen, der größer als 90° ist. Durch diese Schrägstellung der Rückenplatte können Reifen bis an die Rückenplatte gerollt werden und liegen dort besser an als beispielsweise an einer senkrechten Rückenplatte.

In einem Ausführungsbeispiel der Vorrichtung ist das Bodenteil als durchgehende Platte ausgeführt. Diese gibt der Vorrichtung eine große Stabilität und ermöglicht die Abstellung von Reifen an beliebigen Positionen auf der Bodenplatte. Das Bodenteil kann jedoch auch in jedem Abteil wenigstens eine Vertiefung und/oder Aussparung aufweisen, um eingebrachte Reifen in so definierten Positionen zu halten. An der Unterseite des Bodenteils können ferner Aufnahmen zur Aufnahme der Vorrichtung durch ein Flurförderzeug vorgesehen sein.

Die erfindungsgemäße Vorrichtung eignet sich dabei nicht nur zur Aufnahme von Reifen, sondern auch von Rädern und/oder Felgen. Dabei können die Reifen auch einsatzbereit auf Felgen aufgezogen und mit Gas befüllt sein. Insbesondere Flugzeugreifen können mit der Vorrichtung auf vorteilhafte Weise gelagert und auch transportiert werden. Flugzeugreifen sind besonders vor Beschädigungen zu schützen, was durch die Vorrichtung ermöglicht werden kann. Da Flugzeugreifen aufgrund ihrer Größe sehr schwer sind, haben sich die als Rampen nutzbaren Klappen als besonders vorteilhaft erwiesen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel der erfindungsgemäßen Lager- und Transportvorrichtung in einer dreidimensionalen Ansicht;
- Fig. 2: die Lager- und Transportvorrichtung nach Fig. 1 in einer Frontansicht;
- Fig. 3: eine vergrößerte Darstellung eines Sicherungsmittels für eine Funktionsstange in Ausschnitt B;
- Fig. 4: einen Längsschnitt A-A durch die Lager- und Transportvorrichtung nach Fig. 1;
- Fig. 5: die Lager- und Transportvorrichtung nach Fig. 1 in einer Seitenansicht;
- Fig. 6: eine vergrößerte Darstellung eines Verriegelungsmittels für eine Klappe in Ausschnitt C;
- Fig. 7: eine Funktionsstange; und
- Fig. 8: eine Lager- und Transportvorrichtung mit einem eingebrachten Reifen.

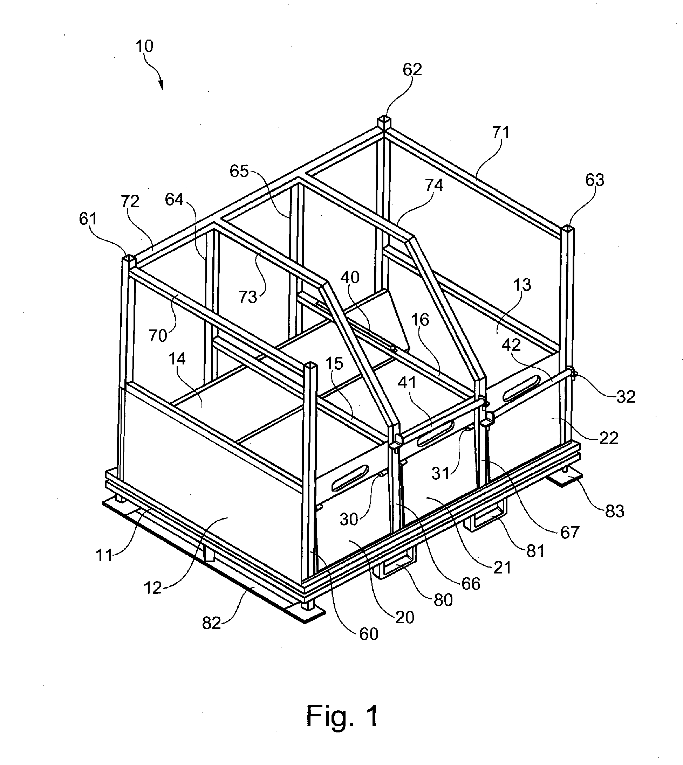

Fig. 1 zeigt eine dreidimensionale Ansicht eines Ausführungsbeispiels der erfindungsgemäßen Lager- und Transportvorrichtung zur Aufnahme von Reifen, die hier jedoch ohne eingebrachte Reifen dargestellt ist. Die Vorrichtung 10 wird wenigstens durch ein Bodenteil 11, zwei Seitenteile 12 und 13 und ein Rückenteil gebildet. So wird ein Behälter geformt, der nach oben und zu einer Seite offen ist. Die offene Seite wird im Sinne dieser Erfindung als vordere Seite bezeichnet, die dem Rückenteil gegenüber liegt. Reifen können also von vorne oder von oben in die Vorrichtung eingebracht werden. Dabei haben das Bodenteil 11 und damit die Vorrichtung beispielsweise Abmessungen von L x B in der Größenordnung von 1600 x 1200 mm.

An der Unterseite des Bodenteils 11 können Aufnahmen vorgesehen sein, um das Anheben und Bewegen der gesamten Vorrichtung 10 durch ein Flurförderzeug zu ermöglichen. Zweckmäßigerweise sind dazu wenigstens zwei Aufnahmen 80 und 81 vorgesehen, welche in einem Abstand voneinander angeordnet sind, der dem Abstand der Gabelzinken eines Flurförderfahrzeugs entspricht. Da es beispielsweise auch Gabelstapler mit horizontal beweglichen Gabelzinken gibt, ist dieser Abstand jedoch nicht zwingend vorgegeben. Die Gabelzinken des Gabelstaplers können in die Aufnahmen 80, 81 verfahren werden, um so die Vorrichtung sicher anzuheben und zu bewegen.

Zusätzlich zu den Aufnahmen 80, 81 sind an den Seitenrändern des Bodenteils 11 vorzugsweise zwei Stützleisten 82 und 83 vorgesehen, auf denen das Gewicht der Vorrichtung 10 liegt, um die Aufnahmen 80, 81 nicht zu stark zu belasten. Ergänzend oder alternativ zu den Stützleisten 82, 83 können mehrere Stützfüße eingesetzt werden. Ferner kann das Bodenteil 11 zusammen mit den Aufnahmen 80, 81 und den Stützleisten 82, 83 auch als Palette ausgeformt sein. In einem Ausführungsbeispiel der Erfindung sind in dem Bodenteil mehrere Vertiefungen und/oder Ausnehmungen vorgesehen, in welche Reifen zum Liegen kommen können. Alternativ oder ergänzend kann die Bodenplatte Rillen, längliche Erhebungen oder sonstige Strukturen aufweisen, um den Halt bzw. die Positionierung der stehenden Reifen auf der Bodenplatte zu verbessern.

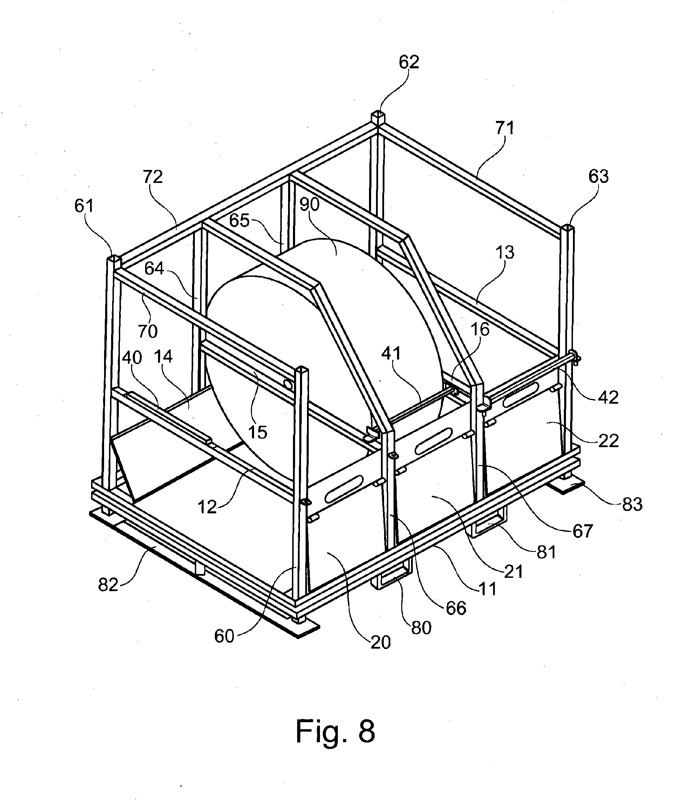

Die Seitenteile 12, 13 sind vorzugsweise als Platten ausgeführt, für eine Gewichtseinsparung können jedoch auch Gitter, Stoffbahnen, Netze, etc. eingesetzt werden. Ferner können die Seitenteile 12, 13 auch als einfache horizontale Streben ausgeführt sein, wie es in dem Ausführungsbeispiel der Fig. 8 der Fall ist. Darüber hinaus weist die Vorrichtung im Ausführungsbeispiel der Fig. 1 vier vertikal auf dem Bodenteil 11 angebrachte Eckpfosten 60, 61, 62 und 63 auf, wobei die Seitenteile 12, 13 jeweils zwischen einem vorderen und hinteren Eckpfosten montiert sind. Dabei überragen die Eckpfosten 60, 61, 62, 63 die Seitenteile 12, 13 und die oberen Enden der Eckpfosten 60, 61, 62, 63 sind durch zwei horizontale Seitenstreben 70 und 71 und eine horizontale Rückenstrebe 72 U-förmig miteinander verbunden. So wird oberhalb der Seitenteile aus diesen horizontalen Streben eine Art Käfig gebildet, der ebenfalls oben und vorne offen ist, so dass Reifen nachwievor von oben und von vorne in die Vorrichtung 10 eingebracht werden können. Die Höhe H der so gebildeten Vorrichtung liegt beispielsweise in der Größenordnung von 1300 mm.

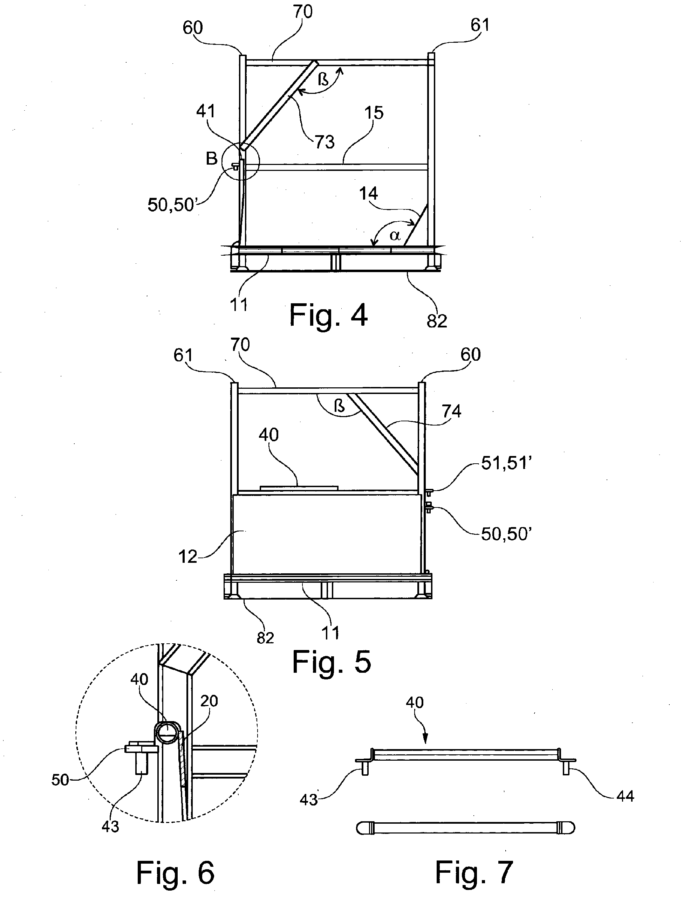

Das Rückenteil wird im Ausführungsbeispiel der Fig. 1 durch zwei vertikale Rückenstreben 64 und 65 und eine Rückenplatte 14 gebildet. Die beiden Rückenstreben 64, 65 erstrecken sich vertikal zwischen dem Bodenteil 11 und der horizontalen Rückenstrebe 72, welche die hinteren Eckpfosten 61 und 62 miteinander verbindet. Dabei ist die Rückenplatte 14 unter einem Winkel α an dem Bodenteil 11 montiert, so dass sie schräg nach außen steht und an den Rückenstreben 64, 65 anliegt bzw. an diesen befestigt ist. Dies ist neben der Fig. 1 auch dem Schnitt A-A zu entnehmen, der in Fig. 4 gezeigt ist. Dabei kann ferner vorgesehen, sein, dass unterhalb der Rückenplatte 14 dreieckige Stützplatten angebracht sind, um die Rückenplatte weiter abzustützen.

Die Vorrichtung 10 weist ferner zwei Abtrennungsteile auf, mit denen der Innenraum der Vorrichtung in drei Abteile aufgeteilt ist. In jedes Abteil wird ein Reifen stehend eingebracht, wobei dieser durch seitliche Begrenzungen nicht zur Seite kippen kann. Um die Vorrichtung vorne abzugrenzen, ist für jedes Abteil eine eigene Klappe 20, 21 und 22 vorgesehen. Jede Klappe 20, 21, 22 ist am vorderen Rand des Bodenteils 11 schwenkbar gelagert, so dass sie zwischen mehreren Stellungen bewegbar ist. In einer aufrechten Stellung der Klappe ist das zugehörige Abteil vorne geschlossen. Wird die Klappe dagegen nach außen geschwenkt, können Reifen entnommen oder eingebracht werden. Um eine Klappe manuell bewegen zu können, können daran ein Griff oder eine Grifföffnung vorgesehen sein.

Ein Abtrennungsteil wird wie im Ausführungsbeispiel der Fig. 1 beispielsweise jeweils durch mehrere Streben gebildet. Eine erste Strebe 15, 16 verläuft dabei horizontal zwischen einer jeweiligen vertikalen Rückenstrebe 64, 65 nach vorne zu den Klappen hin. Diese Strebe 15, 16 bewirkt die eigentliche Abtrennung der Abteile untereinander, verhindert ein seitliches Kippen von stehenden Reifen und kann für sich bereits als Abtrennungsteil bezeichnet werden. Im Bereich der Klappen ist diese horizontale Strebe 15, 16 jedoch vorzugsweise weiterhin mit einer vertikalen Strebe 66, 67 verbunden, die zwischen den Klappen angeordnet ist. Ergänzend kann ein Abtrennungsteil weitere Streben umfassen, wobei eine Verbindungsstrebe 73, 74 die horizontale Rückenstrebe 72 (bzw. eine vertikale Rückenstrebe 64, 65) mit den vertikalen Streben 66, 67 verbindet. Dazu ist eine Verbindungsstrebe 73, 74 abgewinkelt ausgeführt und verläuft in einem ersten Abschnitt von der jeweiligen horizontalen Rückenstrebe 72 aus parallel zu den horizontalen Seitenstreben 70, 71 nach vorne, während ein zweiter Abschnitt unter einem Winkel β in Richtung zu dem oberen Ende der jeweiligen vertikalen Strebe 66, 67 hin verläuft. Dabei ist der Winkel β größer als 90°. So ergibt sich jeweils ein Abtrennungsteil, das in der Seitenansicht durch die Verbindungsstrebe 73, 74, einen Teil einer vertikalen Rückenstrebe 64, 65 und eine Strebe 15, 16 ein rechtwinkliges Trapez bildet. Dies ist insbesondere auch den Figuren 4 und 5 zu entnehmen.

Die Verbindungen zwischen Bodenteil, Seitenteilen, Rückenplatte und den diversen Streben und Pfosten können lösbar beispielsweise durch Schraub-, Stift - und/oder Steckverbindungen realisiert werden. Auch teleskopartige Verbindungen sind denkbar, um wenigstens die Höhe der Vorrichtung variabel gestalten zu können. Dazu können beispielsweise die Eckpfosten teleskopartig ausgeführt sein, so dass ihre Länge variiert werden kann. Es ist jedoch auch möglich, alle Bauteile miteinander zu verschweißen, um so die Stabilität der Vorrichtung zu erhöhen. Ferner können die einzelnen Bauteile aus Stahl, Aluminium, Kunststoff, Holz oder anderen Materialien geformt sein. Auch geeignete Materialkombinationen sind möglich.

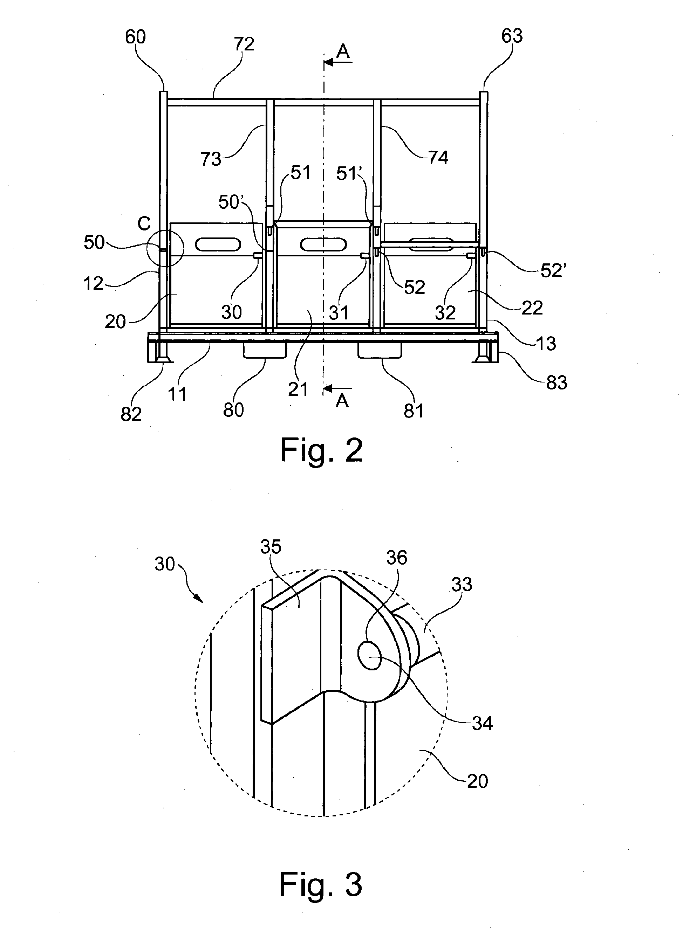

Der beschriebene Grundaufbau der Vorrichtung wird ergänzt durch Verriegelungsmittel, mit denen die Klappen 20, 21, 22 in einer geschlossenen Stellung fixiert werden können. Diese Verriegelungsmittel sind insbesondere der Fig. 2 zu entnehmen, die eine Frontansicht der Vorrichtung nach Fig. 1 zeigt. Hierbei sind alle Klappen 20, 21, 22 nach oben geklappt und werden durch seitliche Verriegelungsmittel 30, 31 und 32 in dieser Stellung gehalten. Eingebrachte Reifen können so nicht unbeabsichtigt aus den Abteilen der Vorrichtung 10 rollen/fallen. Aber auch beim Transport von leeren oder nur teilweise mit Reifen beladenen Vorrichtungen ist diese Verriegelung von Vorteil, da die Klappen nicht störend herabschwenken können.

Als Verriegelung können jegliche Mechanismen eingesetzt werden, die eine sichere Verriegelung ermöglichen, jedoch manuell einfach zu lösen sind. In einem Ausführungsbeispiel der Erfindung ist dazu als Verriegelungsmittel 30 an einer Klappe 20, 21, 22 ein Verschlusskörper mit einer federbelasteten Kugel angebracht, wie es vergrößert auch in Fig. 3 dargestellt ist. Die Kugel 34 ragt aus dem Verschlusskörper 33 heraus und kann gegen eine Federkraft in den Verschlusskörper 33 gedrückt werden. An den vorderen Eckpfosten 60 und 63 und den vertikalen Streben 66 und 67 ist dazu vorzugsweise im oberen Bereich der Klappen eine entsprechende Kugelaufnahme 35 mit einer Öffnung 36 angebracht, in welche die Kugel 34 einer jeden Verriegelung einrasten kann. Wird eine Klappe 20 nach oben geklappt, gleitet die Kugel 34 an der Kugelaufnahme 35 entlang und wird dabei aufgrund der gewählten Abstände gegen die Federkraft in den Verschlusskörper 33 gedrückt. Sobald die Kugel 34 die Öffnung 36 innerhalb der Kugelaufnahme 35 erreicht hat, kann sich die Kugel 34 wieder nach außen drücken und rastet in die Öffnung 36 ein. Dieser Mechanismus ist wenigstens an einer Seite, jedoch vorzugsweise an beiden Seiten einer Klappe vorgesehen. So ist eine gewisse Verriegelung der Klappen gegeben, wobei diese durch ein manuelles Ziehen an einer Klappe jedoch leicht aufhebbar ist.

Alternativ können auch andere Verriegelungsmechanismen beispielsweise mit Haken, Riegeln, Ketten, Stiften, etc. eingesetzt werden. Sie sollten dabei trotz Sicherung einer Klappe in einer definierten Stellung ohne größeren Aufwand wieder zu entriegeln sein.

Um eine solche Verriegelung zusätzlich zu sichern, ist vorgesehen, dass außen vor jeder Klappe 20, 21, 22 eine Funktionsstange 40, 41, 42 anbringbar ist. Diese Funktionsstange 40, 41, 42 wird quer vor der jeweiligen Klappe angebracht, so dass die Klappe nicht mehr nach außen schwenken kann. Dazu ist eine Funktionsstange 40, wie sie in einer Seitenansicht und einer Aufsicht in der Fig. 7 gezeigt ist, beispielsweise an den Enden mit Stiften 43 und 44 versehen. An den vorderen Eckpfosten 60, 63 und den vertikalen Streben 66, 67 der Abtrennungsteile befinden sich dann entsprechende Aufnahmen mit Öffnungen, in welche die Stifte der Funktionsstangen von oben eingeführt werden können. Dies ist aus der Seitenansicht der Fig. 6 ersichtlich, welche zeigt, wie der Stift 43 einer Funktionsstange 40 in eine Stiftaufnahme 50 eingesteckt wurde, so dass die Klappe 20 nicht nach außen, d.h. in Fig. 6 nach links schwenken kann.

Wie insbesondere aus der Fig. 2 ersichtlich, werden die drei Funktionsstangen 40, 41, 42 vorzugsweise auf unterschiedlichen Höhen angebracht, damit die verwendeten Aufnahmen in der Breite nicht zu viel Platz beanspruchen. Beispielsweise ist dabei die mittlere Funktionsstange 41 höher positioniert als die beiden äußeren Funktionsstangen 40 und 42 (Funktionsstange 40 ist in Fig. 2 nicht dargestellt). Die zugehörigen Sicherungsmittel 50, 50', 51, 51', 52 und 52' jeweils auf beiden Seiten einer Klappe sind somit auf unterschiedlichen Höhen angeordnet.

Ferner sind die Funktionsstangen 40, 41, 42 vorzugsweise so ausgebildet, dass sie auch quer in ein Abteil der Vorrichtung eingebracht werden können, um so ein Abteil in zwei Bereiche aufzuteilen. Dies ist in Fig. 8 gezeigt, wobei die Funktionsstange 41 des mittleren Abteils hier nicht vor der Klappe 21 angebracht ist, sondern quer zwischen den Streben 15 und 16 montiert ist. Das Gleiche kann auch in den beiden äußeren Abteilen erfolgen, wobei dann jeweils ein Seitenteil als Auflage für die Funktionsstange dient. Vorzugsweise weisen die Seitenteile 12, 13 und die Streben 15, 16 dazu die gleichen Sicherungsmittel auf, wie sie für die Sicherung der Funktionsstangen vor einer Klappe vorgesehen ist. Daher sind auf der Oberseite der Streben 15, 16 und den Seitenteilen 12, 13 beispielsweise ebenfalls Öffnungen vorgesehen, in welche die Stifte der Funktionsstangen eingesteckt werden können. So ist die Funktionsstange 41 in Fig. 8 gegen horizontales Verschieben gesichert. Diese Funktion kann dazu genutzt werden, um einen kleineren Reifen in das so in der Tiefe reduzierte Abteil einzubringen, wobei die Funktionsstange den Reifen an einer Bewegung in Richtung Klappe hindert. Doch auch größere Reifen 90 können durch eine Funktionsstange an einer unerwünschten Bewegung innerhalb eines Abteils gesichert werden, wie es in der Fig. 8 dargestellt ist. Ein Reifen 90 ist so zwischen der schrägen Rückenplatte 14 und der Funktionsstange 41 innerhalb des Abteils gegen Bewegung gesichert.

Die Funktionsstange jedes Abteils kann somit wahlweise zur Sicherung der zugehörigen Klappe oder zur Reduzierung der Größe des Abteils eingesetzt werden. Es kann jedoch auch für jede dieser Funktionen eine eigene Stange vorgesehen werden. Sollten die Seitenteile nicht dazu geeignet sein, auf ihrer Oberseite Öffnungen vorzusehen, können oberhalb jedes Seitenteils weitere horizontale Streben angebracht sein, um dies zu ermöglichen. Zur Anbringung der Funktionsstangen in den Abteilen können jedoch auch andere Sicherungsmechanismen vorgesehen sein, als sie für die Anbringung der Funktionsstangen vor den Klappen gewählt werden. Beispielsweise können an der Oberseite der Seitenteile 12, 13 und der Streben 15, 16 Einbuchtungen vorhanden sein, in welche die Funktionsstangen einfach eingelegt werden können.

Vorzugsweise können die Funktionsstangen in unterschiedlichen Positionen in den Abteilen angebracht werden, um die Aufteilung des jeweiligen Abteils an die Größe des einzubringenden Reifens anpassen zu können. Daher sind über die Länge der Seitenteile 12, 13 bzw. der Streben 15, 16 beispielsweise mehrere Öffnungen und/oder Einbuchtungen vorgesehen, so dass eine Person für die Anbringung einer Funktionsstange zwischen diesen Positionen wählen kann. Darüber hinaus sind auch Klemmlösungen denkbar, mit denen die Funktionsstangen ohne besondere Vorkehrungen an den Seitenteilen und den Streben an beliebigen Stellen an diesen angebracht werden können.

In einem weiteren Ausführungsbeispiel der Erfindung kann eine Funktionsstange auch so an einem Seitenteil 12, 13 oder einer Strebe 15, 16 angebracht werden, dass sie kein Abteil abtrennt. Dies ist beispielsweise für die Funktionsstange 40 in den Figuren 1, 5 und 8 der Fall, da diese hier auf der Strebe 16 bzw. dem Seitenteil 12 aufliegt. Wenn eine Funktionsstange zeitweise nicht benötigt wird, kann sie so auf einfache Weise an der Vorrichtung angebracht werden, ohne dass sie verloren geht. Dabei können die gleichen Befestigungsmittel zum Einsatz kommen wie beim Einbringen von Funktionsstangen quer in den Abteilen.

Ohne eingebrachte Reifen sind die Funktionsstangen vorzugsweise vor den Klappen montiert, um die Klappen zusätzlich zu den Verriegelungsmitteln zu sichern. Soll ein Reifen in ein Abteil eingebracht werden, wird eine Funktionsstange gelöst und die zugehörige Klappe wird manuell nach vorne gezogen, so dass sich die Verriegelung löst bzw. eine andersartige Verriegelung wird manuell gelöst, bevor die Klappe nach vorne gezogen werden kann. Die Klappe wird dann soweit nach unten gelassen, bis sie auf dem Boden aufliegt und eine Rampe bildet, welche den Höhenunterschied zwischen Boden und der Oberseite des Bodenteils 11 überbrückt. Über diese Rampe kann dann ein Reifen in das betreffende Abteil gerollt werden, bis er hinten an der Rückenplatte 14 anstößt. Nach Erreichen dieser Position des Reifens kann die zugehörige Funktionsstange so zwischen den seitlichen Begrenzungen des Abteils eingebracht werden, dass sie sich möglichst nah an dem Reifen befindet bzw. an diesem anliegt. Die Klappe kann dann wieder hochgeklappt und verriegelt werden.

Für einen Transport der Vorrichtung kann diese mit einem Flurförderzeug wie einem Gabelstapler mit oder ohne Reifen angehoben und bewegt werden. Auch ein Übereinanderstapeln mehrerer Vorrichtungen kann ermöglicht werden, wenn die Stabilität der Vorrichtung entsprechend gewährleistet ist.

### Bezugszeichenliste:

- 10: Lager- und Transportvorrichtung
- 11: Bodenteil
- 12,13: Seitenteil
- 14: Rückenplatte
- 15,16: Abtrennungsteil, Strebe
- 20,21,22: Klappe
- 30,31,32: Verriegelungsmittel
- 33: Verschlusskörper
- 34: Kugel
- 35: Kugelaufnahme
- 36: Öffnung
- 40,41,42: Funktionsstange
- 43,44: Stift
- 50,50',51,51',52,52': Sicherungsmittel
- 60,61,62,63: Eckpfosten
- 64,65: Vertikale Rückenstrebe
- 70,71: Horizontale Seitenstrebe
- 72: Horizontale Rückenstrebe
- 73,74: Verbindungsstrebe
- 80,81: Aufnahme
- 82,83: Stützleiste
- 90: Reifen

- α: Innerer Winkel zwischen Rückenplatte und Bodenteil
- β: Innerer Winkel zwischen Abschnitten der Verbindungsstrebe

## Patentansprüche

1. Lager- und Transportvorrichtung (10) zur Aufnahme von Reifen, umfassend ein Bodenteil (11), zwei Seitenteile (12;13) und ein Rückenteil, wodurch ein von vorne zugänglicher Behälter gebildet wird, der ferner durch wenigstens ein parallel zu den Seitenteilen (12;13) verlaufendes Abtrennungsteil (15;16) in mehrere Abteile aufgeteilt ist, wobei in jedes Abteil jeweils ein Reifen hochkant einbringbar ist, und jedes der Abteile auf der von vorne zugänglichen Seite eine schwenkbare Klappe (20;21;22) aufweist, die am Rand des Bodenteils (11) gelagert ist, **dadurch gekennzeichnet, dass** die Klappen (20;21;22) in einer hochgeschwenkten Stellung durch Verriegelungsmittel (30;31;32) in einer definierten Position fixierbar sind, und dass die Vorrichtung wenigstens eine Funktionsstange (40;41;42) umfasst, wobei die Seitenteile (12;13) und das wenigstens eine Abtrennungsteil (15;16) Mittel aufweisen, um die Funktionsstange (40;41;42) so zwischen diesen anzubringen, dass hierdurch das jeweilige Abteil in zwei Bereiche aufgeteilt wird.

2. Lager- und Transportvorrichtung nach Anspruch 1,
**dadurch gekennzeichnet, dass** die Seitenteile (12;13) und das Abtrennungsteil (15;16) Mittel zur Anbringung der Funktionsstange (40;41;42) in wenigstens zwei Stellungen aufweisen, wobei sich die Stellungen durch ihre horizontale Lage auf den Seitenteilen (12;13) und dem Abtrennungsteil (15;16) unterscheiden.

3. Lager- und Transportvorrichtung nach einem oder beiden der Ansprüche 1 und 2,
**dadurch gekennzeichnet, dass** das Abtrennungsteil (15;16) und/oder die Seitenteile (12;13) und die Funktionsstange (40;41;42) so ausgebildet sind, dass die Funktionsstange (40;41;42) auch vollständig an dem Abtrennungsteil (15;16) oder den Seitenteilen (12;13) angebracht werden kann.

4. Lager- und Transportvorrichtung nach einem oder mehreren der Ansprüche 1 bis 3,
**dadurch gekennzeichnet, dass** jedes Abteil Sicherungsmittel (50;50';51;51',52;52') umfasst, mit denen auf der Außenseite jeder Klappe (20;21;22) wenigstens zwischen einem Seitenteil (12;13) und einem Abtrennungsteil (15;16) eine Funktionsstange (40;41;42) anbringbar ist.

5. Lager- und Transportvorrichtung nach Anspruch 4,
**dadurch gekennzeichnet, dass** sie mehrere Funktionsstangen (40;41;42) aufweist, wobei die Funktionsstangen (40;41;42) nach den Ansprüchen 1 bis 4 identisch ausgebildet sind.

6. Lager- und Transportvorrichtung nach einem oder mehreren der Ansprüche 1 bis 5,
**dadurch gekennzeichnet, dass** die Verriegelungsmittel (30;31;32) an einem Seitenteil (12;13) und dem wenigstens einen Abtrennungsteil (15;16) angebracht sind.

7. Lager- und Transportvorrichtung nach einem oder mehreren der Ansprüche 1 bis 6,
**dadurch gekennzeichnet, dass** die zwei Seitenteile (12;13) und das Rückenteil zwischen vier vertikal auf den Eckbereichen des Bodenteils (11) angebrachten Eckpfosten (60;61;62;63) montiert sind, wobei die Eckpfosten (60;61;62;63) die zwei Seitenteile (12;13) und das Rückenteil überragen und die obere Enden der Eckpfosten (60;61;62;63) durch wenigstens zwei horizontale Seitenstreben (70;71) und eine horizontale Rückenstrebe (72) miteinander verbunden sind.

8. Lager- und Transportvorrichtung nach einem oder mehreren der Ansprüche 1 bis 7,
**dadurch gekennzeichnet, dass** ein Abtrennungsteil wenigstens durch eine horizontale Strebe (15;16) und eine sich an deren erstem Ende anschließende vertikale Strebe (66;67) gebildet wird, wobei die vertikale Strebe (66;67) auf Höhe der Klappen (20;21;22) an dem Bodenteil (11) angebracht ist, und die horizontale Strebe (15;16) mit ihrem zweiten Ende an dem Rückenteil montiert ist.

9. Lager- und Transportvorrichtung nach den Ansprüchen 7 und 8,
**dadurch gekennzeichnet, dass** das Abtrennungsteil eine schräg abgewinkelte Verbindungsstrebe (73;74) umfasst, die an dem Rückenteil angebracht ist, wobei ein erster Abschnitt der Verbindungsstrebe (73;74) von dem Rückenteil aus parallel zu den horizontalen Seitenstreben (70;71) nach vorne verläuft und ein zweiter Abschnitt unter einem Winkel β zu dem oberen Ende der vertikalen Strebe (66;67) hin verläuft, und dass der Winkel β größer als 90° ist.

10. Lager- und Transportvorrichtung nach einem oder mehreren der Ansprüche 1 bis 9,
**dadurch gekennzeichnet, dass** das Rückenteil durch eine Rückenplatte (14) und wenigstens eine vertikale Rückenstrebe (64;65) gebildet ist, an welcher die Rückenplatte (14) angebracht ist.

11. Lager- und Transportvorrichtung nach Anspruch 10,
**dadurch gekennzeichnet, dass** die Rückenplatte (14) in einem Winkel α zu dem Bodenteil (11) steht, der größer als 90° ist.

12. Lager- und Transportvorrichtung nach einem oder mehreren der Ansprüche 1 bis 11,
**dadurch gekennzeichnet, dass** das Bodenteil (11) als durchgehende Platte ausgeführt ist.

13. Lager- und Transportvorrichtung nach einem oder mehreren der Ansprüche 1 bis 11,
**dadurch gekennzeichnet, dass** das Bodenteil (11) in jedem Abteil wenigstens eine Vertiefung und/oder Aussparung aufweist.

14. Lager- und Transportvorrichtung nach einem oder mehreren der Ansprüche 1 bis 13,
**dadurch gekennzeichnet, dass** an der Unterseite des Bodenteils (11) Aufnahmen (80;81) zur Aufnahme der Vorrichtung (10) durch ein Flurförderzeug vorgesehen sind.

## Claims

1. A storage and transport device (10) for accommodating tyres, comprising a bottom part (11), two side parts (12; 13) and a back part, whereby a container accessible from the front is formed, which is furthermore divided into several compartments by at least one partition (15; 16) extending parallel to the side parts (12; 13), wherein one tyre, respectively, can be inserted into each compartment in an upright orientation, and each of the compartments has on the side accessible from the front a pivotable flap (20; 21; 22) mounted at the edge of the bottom part (11), **characterised in that** the flaps (20; 21; 22), in an upwardly pivoted position, can be fixed by locking means (30; 31; 32) in a defined position, and that the device comprises at least one function rod (40; 41; 42), wherein the side parts (12; 13) and the at least one partition (15; 16) comprise means to attach the function rod (40; 41; 42) between them in such a way that the respective compartment is thereby divided into two regions.

2. The storage and transport device according to claim 1,
**characterised in that** the side parts (12; 13) and the partition (15; 16) comprise means for attaching the function rod (40; 41; 42) in at least two positions, wherein the positions differ in their horizontal position on the side parts (12; 13) and the partition (15; 16).

3. The storage and transport device according to any one or both of the claims 1 and 2,
**characterised in that** the partition (15; 16) and/or the side parts (12; 13) and the function rod (40; 41; 42) are configured in such a way that the function rod (40; 41; 42) can also be attached completely on the partition (15; 16) or the side parts (12; 13).

4. The storage and transport device according to any one or several of the claims 1 to 3,
**characterised in that** each compartment comprises securing means (50; 50'; 51; 51'; 52; 52') with which a function rod (40; 41; 42) can be attached on the outside of each flap (20; 21; 22) at least between one side part (12; 13) and a partition (15; 16).

5. The storage and transport device according to claim 4,
**characterised in that** it has several function rods (40; 41; 42), the function rods (40; 41; 42) being configured in an identical manner in accordance with the claims 1 to 4.

6. The storage and transport device according to any one or several of the claims 1 to 5,
**characterised in that** the locking means (30; 31; 32) are attached to one side part (12; 13) and the at least one partition (15; 16).

7. The storage and transport device according to any one or several of the claims 1 to 6,
**characterised in that** the two side parts (12; 13) and the back part are mounted between four corner posts (60; 61; 62; 63) attached vertically on the corner regions of the bottom part (11), the corner posts (60; 61; 62; 63) projecting over the two side parts (12; 13) and the back part and the top ends of the corner posts (60; 61; 62; 63) being connected to each other by at least two horizontal lateral struts (70; 71) and a horizontal back strut (72).

8. The storage and transport device according to any one or several of the claims 1 to 7,
**characterised in that** a partition is formed at least by one horizontal strut (15; 16) and a vertical strut (66; 67) adjacent to the first end thereof, the vertical strut (66; 67) being attached at the level of the flaps (20; 21; 22) on the bottom part (11) and the horizontal flap (15; 16) being mounted with the second end thereof on the back part.

9. The storage and transport device according to the claims 7 and 8,
**characterised in that** the partition comprises an obliquely bent connecting strut (73; 74) attached to the back part, wherein a first section of the connecting strut (73; 74) extends from the back part towards the front parallel to the horizontal lateral struts (70; 71) and a second section extends at an angle β towards a top end of the vertical strut (66; 67), and that the angle β is greater than 90°.

10. The storage and transport device according to any one or several of the claims 1 to 9,
**characterised in that** the back part is formed by a back plate (14) and at least one vertical back strut (64; 65) to which the back plate (14) is attached.

11. The storage and transport device according to claim 10,
**characterised in that** the back plate (14) stands at an angle α to the bottom part (11), which is greater than 90°.

12. The storage and transport device according to any one or several of the claims 1 to 11,
**characterised in that** the bottom part (11) is configured as a continuous plate.

13. The storage and transport device according to any one or several of the claims 1 to 11,
**characterised in that** the bottom part (11) has in each compartment at least one depression and/or recess.

14. The storage and transport device according to any one or several of the claims 1 to 13,
**characterised in that** accommodating portions (80; 81) are provided on the underside of the bottom part (11) for the device (10) to be accommodated by a ground conveyor.

## Revendications

1. Dispositif de stockage et de transport (10) destiné à recevoir des pneus, comprenant une partie de fond (11), deux parties latérales (12; 13) et une partie arrière, formant ainsi un contenant accessible par devant qui, en outre, est divisé en plusieurs compartiments par au moins une partie de séparation (15; 16) s'étendant parallèlement aux parties latérales (12; 13), un pneu respectivement pouvant être introduit debout dans chaque compartiment, et chacun des compartiments présentant sur le côté accessible par devant une trappe pivotante (20; 21; 22) qui est logée sur le bord de ladite partie de fond (11), **caractérisé par le fait que** lesdites trappes (20; 21; 22), dans une position où elles sont pivotées vers le haut, peuvent être fixées par des moyens de verrouillage (30; 31; 32) dans une position définie, et que le dispositif comprend au moins une tige fonctionnelle (40; 41; 42), lesdites parties latérales (12; 13) et ladite au moins une partie de séparation (15; 16) présentant des moyens afin de monter ladite tige fonctionnelle (40; 41; 42) de telle manière entre celles-ci que, ce faisant, le compartiment respectif est divisé en deux zones.

2. Dispositif de stockage et de transport selon la revendication 1, **caractérisé par le fait que** lesdites parties latérales (12; 13) et ladite partie de séparation (15; 16) présentent des moyens de montage de la tige fonctionnelle (40; 41; 42) dans au moins deux positions, les positions se distinguant par leur position horizontale sur les parties latérales (12; 13) et la partie de séparation (15; 16).

3. Dispositif de stockage et de transport selon l'une ou les deux des revendications 1 et 2, **caractérisé par le fait que** ladite partie de séparation (15; 16) et/ou lesdites parties latérales (12; 13) et la tige fonctionnelle (40; 41; 42) sont réalisées de telle manière que ladite tige fonctionnelle (40; 41; 42) peut être montée également complètement sur la partie de séparation (15; 16) ou les parties latérales (12; 13).

4. Dispositif de stockage et de transport selon l'une ou plusieurs des revendications 1 à 3, **caractérisé par le fait que** chaque compartiment comprend des moyens de sûreté (50; 50'; 51; 51', 52; 52') par lesquels une tige fonctionnelle (40; 41; 42) peut être montée sur la face extérieure de chaque trappe (20; 21; 22), au moins entre une partie latérale (12; 13) et une partie de séparation (15; 16).

5. Dispositif de stockage et de transport selon la revendication 4, **caractérisé par le fait qu'**il présente une pluralité de tiges fonctionnelles (40; 41; 42), lesdites tiges fonctionnelles (40; 41; 42) selon les revendications 1 à 4 sont réalisées de façon identique.

6. Dispositif de stockage et de transport selon l'une ou plusieurs des revendications 1 à 5, **caractérisé par le fait que** lesdits moyens de verrouillage (30; 31; 32) sont montés sur une partie latérale (12; 13) et ladite au moins une partie de séparation (15; 16).

7. Dispositif de stockage et de transport selon l'une ou plusieurs des revendications 1 à 6, **caractérisé par le fait que** les deux parties latérales (12; 13) et ladite partie arrière sont montées entre quatre montants d'angle (60; 61; 62; 63) placés verticalement sur les zones angulaires de la partie de fond (11), lesdits montants d'angle (60; 61; 62; 63) dépassant les deux parties latérales (12; 13) et la partie arrière, et les extrémités supérieures des montants d'angle (60; 61; 62; 63) étant reliées entre elles par au moins deux entretoises latérales horizontales (70; 71) et une entretoise arrière horizontale (72).

8. Dispositif de stockage et de transport selon l'une ou plusieurs des revendications 1 à 7, **caractérisé par le fait qu'**une partie de séparation est constituée par au moins une entretoise horizontale (15; 16) et une entretoise verticale (66; 67) se joignant à la première extrémité de celle-ci, ladite entretoise verticale (66; 67) étant montée au niveau des trappes (20; 21; 22) sur ladite partie de fond (11), et ladite entretoise horizontale (15;16) étant montée par sa deuxième extrémité sur ladite partie arrière.

9. Dispositif de stockage et de transport selon les revendications 7 et 8, **caractérisé par le fait que** ladite partie de séparation comprend une entretoise de liaison (73; 74) qui est coudée en biais et qui est montée sur ladite partie arrière, une première portion de ladite entretoise de liaison (73; 74) s'étendant en avant à partir de la partie arrière, parallèlement aux entretoises latérales horizontales (70; 71), et une deuxième portion s'étendant à un angle β en direction de l'extrémité supérieure de ladite entretoise verticale (66; 67), et que ledit angle β est supérieur à 90°.

10. Dispositif de stockage et de transport selon l'une ou plusieurs des revendications 1 à 9, **caractérisé par le fait que** ladite partie arrière est constituée par une plaque arrière (14) et au moins une entretoise arrière verticale (64; 65) sur laquelle ladite plaque arrière (14) est montée.

11. Dispositif de stockage et de transport selon la revendication 10, **caractérisé par le fait que** ladite plaque arrière (14) est posée à un angle α par rapport à ladite partie de fond (11) qui est supérieur à 90°.

12. Dispositif de stockage et de transport selon l'une ou plusieurs des revendications 1 à 11, **caractérisé par le fait que** ladite partie de fond (11) est réalisée en tant que plaque continue.

13. Dispositif de stockage et de transport selon l'une ou plusieurs des revendications 1 à 11, **caractérisé par le fait que** ladite partie de fond (11) dans chaque compartiment présente au moins un creux et/ou évidement.

14. Dispositif de stockage et de transport selon l'une ou plusieurs des revendications 1 à 13, **caractérisé par le fait que** des logements (80; 81) destinés à recevoir le dispositif (10) par un chariot de manutention sont prévus sur la face inférieure de ladite partie de fond (11).
